# EUROPEAN PATENT APPLICATION

(11) **EP 1 056 049 A2**
(43) Date of publication of application: **29.11.2000**
(21) Application number: 00304381.7
(22) Date of filing: 24.05.2000
(51) Int. Cl.: G06T 15/00

(54) **Method and apparatus for displaying volumetric data**

(30) Priority: 27.05.1999 GB 9912438
(71) Applicant: United Bristol Healthcare NHS Trust, Bristol, BS1 3NU (GB)
(72) Inventor: Jones, Michael Greystock, Dr., Redcliff, Bristol BS1 6SX (GB)
(74) Representative: Beck, Simon Antony

(57) **Abstract**

A method of and apparatus for displaying volumetric date is described. The data is displayed in a first, generally low resolution, mode so as to provide contextual information to a viewer. The viewer can hi-light volumes of interest, for example through a gaze tracking device, so as to cause these volumes to be displayed as an enhanced region, which typically is brighter and has a higher resolution

## Description

The present invention relates to a method of and apparatus for displaying volumetric data. The invention also relates to an eye tracking method and apparatus.

There are various occasions when it is desired to analyse volumetric data. Such data may be formed by taking view slices through an object. The view slices may be obtained invasively, whereby the object is cut into a plurality of layers and view of each layer is then captured. Alternatively, non invasive image capture may be performed using, for example, nuclear magnetic resonance imaging or ultrasound techniques. However, it should be understood that other suitable data collection techniques can be employed.

There is particular interest in the display of medical image data, both for diagnostic work, and for tele-medicine. A typical volumetric data set is made up of a plurality of voxels. Each voxel is the three-dimensional equivalent of a pixel. A typical image dataset may contain 256 x 256 x 128 voxels. Appreciating subtle structures and textures in medical voxel datasets is highly challenging. Presentation techniques for such three-dimensional data includes multi-planar slicing, surface rendering and volume rendering. Multi-planar slicing displays the data set at planes cut through the data volume. Surface rendering uses segmentation to identify boundaries within the data which are then represented as a set of surface patches. Volume rendering produces two-dimensional projections through the three-dimensional data set directly. Each displayed pixel projects through a plurality of data set voxels (apart from those whose projection miss the data set boundaries) and thus may be influenced by each voxel's sample value. Taking the maximum of these voxel values ("maximum intensity") or their sum ("integrated intensity") are two common modes of combining voxel values. All of these presentation techniques remove information such as subtle texture variations contained within the raw data.

All of these techniques for displaying volumetric data can be enhanced by causing the view of the dataset to undergo motion, typically cyclical motion, in order that the observer can use parallax cues in order to enhance his perception. Other techniques, such as added depth cues, for example brightening foreground features, also help, as can the use of stereoscopic displays to present different view points to the left and right eyes of the observer.

According to a first aspect of the present invention, there is provided a method of displaying data, wherein the data represents structure within at least a three-dimensional space, the method comprising the steps of generating a first image in which the data is displayed in a first display mode, calculating a position of an enhancement region within the data space, and generating an enhanced image representing the data within the enhancement region and displaying the enhanced image in second display mode.

It is thus possible to provide a method of displaying volumetric data in which the dataset can be displayed in a first fashion, which can be a fairly low resolution mode in which structures are rendered in a first form, for example in a volume rendering form, thereby giving an overview of the whole of the dataset, and portions of interest of the data can be augmented by display in a second fashion, which may have greater resolution and/or may use a different rendering technique, such as surface rendering, or may render the data to be brighter and/or less translucent in order that it is more clearly visible.

Preferably the enhancement region may be moved interactively through the dataset.

The second display mode may be formed by combining data from the enhanced image in combination with data from the first image. The combination may be formed as a superposition of the different images. Alternatively the contribution of the first image may be reduced or omitted.

Advantageously the dataset is displayed in a stereoscopic form, with different view points being presented to the observer's left and right eyes, respectively. Additionally or alternatively, the dataset may also be rotated in space in order to present the observer with a plurality of views of the data. The enhanced image may be produced under orthographic or perspective projection. If perspective projection is used, stereoscopic images may be generated with each eye seeing an image corresponding to a different view point. Existing display technologies can be used to separate the left eye and right eye images.

Advantageously the first image renders the data in a volumetric mode. Thus multiple planes of data are presented at each time, and the data in each of the planes is simultaneously observable to the observer. This data can be regarded as providing contextual information, concerning orientation and structure, but can be presented at a relatively low resolution in order to conserve computer processing power.

Preferably the data in the enhanced region is provided at a higher resolution and may also be presented with a higher contrast and/or brightness compared to the data in the first display mode thereby making it clearly visible to the user. The use of local enhancement within the data volume allows the masking effect of overlapping voxels lying along the same projection lines to be reduced. Furthermore, data away from the enhancement region could be progressively blurred.

Additionally or alternatively, the dataset may be pre-processed to extract features in order to represent them in outline within the first display mode. The features may be detected by correlation of datasets in order to identify structures which run within and through datasets. This correlation can be used to form series of maps, for example one for each feature, which describes how that feature exists within the volume. The maps may then be used during the generation of perspective views. Each view may enhance, or de-enhance, a local region to a different degree. Each rendered pixel may be regarded as corresponding to a ray line that passes through a series of regions. A function may be mapped onto each line describing the degree of enhancement of de-emphasis to apply along the line. Local enhancement may then be performed by using the function as described along this line, describing, for example, the local weighting applied to a voxel (for example, by taking the value of the voxel and multiplying it by an enhancement factor), the degree of transparency, local blurring, or some other method for controlling each region's importance.

Advantageously the data space is subdivided into a plurality of enhancement regions, for example in a regular array. It is possible to compute all the imaging data in real time, but substantial savings in computing power may be obtained by pre-processing the data to obtain the series of views required to represent the data in the first mode. Additionally or alternatively, pre-processing may also be provided to calculate the views for each enhanced region, wherein each region is localised around an enhancement centre. The enhancement views can then be selected on the basis of a user input device and displayed almost instantaneously. It is also worth noting that, because the enhancement region is smaller (often much smaller) than the data space, projections through it can be calculated sufficiently quickly for real time calculation/display to be used.

A number of techniques may be used for defining the position of the enhancement region. The dataset may, for example, be represented in two or more two-dimensional views. For example, a view of the data space in two orthogonal planes allows the centre of enhancement region to be defined by reference to those planes. As a further alternative, a view may be presented in, for example, the X-Y plane and a user may position a cursor on that plane to select the position from the X and Y directions and may then further select a position using a cursor along a line or plane showing the Z direction.

Alternatively, spatial tracking techniques may be used, such as the positioning of a magnetic sensor with respect to a plurality of field sources. Such devices are commercially available.

Preferably, the data input device is an eye tracking system which determines the direction of a user's gaze in order to calculate the region of space within the dataset that the user is looking at.

According to a second aspect of the present invention, there is provided an apparatus for displaying volumetric data, the apparatus comprising a data processor for generating a first image in which the data is displayed in a first display mode, input means for defining the position of an enhancement region within the data space, and means for generating an enhanced image representing the data in the enhancement region, the enhanced data being displayed in a second display mode.

According to a third aspect of the present invention, there is provided a method of tracking an observer's fixation point within an image or object, the image or object being subject to rotation in a display space, the method comprising the steps of monitoring the direction of gaze of at least one eye of the observer at first and second times in order to triangulate the direction of gaze to calculate the fixation point.

Preferably both of the observer's eyes are monitored to calculate his fixation point.

It is thus possible to provide a three dimensional fixation point tracking system, that is a system capable of determining the position within a volume, that the observer is looking at.

In stereoscopic display systems presenting three-dimensional images to the observer, the observer's eyes converge on a point in a three-dimensional space. A problem with eye tracking is that the eyes are close together, thereby only giving a relatively short base line from which to commence triangulation calculations. Small errors in the measurement of the direction of each eye can give rise to erroneous calculation of the observer's fixation point.

The applicant has realised that the base line can effectively be extended in the context of imaging systems in which the dataset is moved (such movement is often rotational) in space in order to enhance its three-dimensional appearance. It will be appreciated that rotation of the dataset with respect to the observer is equivalent to motion of the observer with respect to the view of the dataset. As the observer moves round the dataset, the left eye (or right eye) may move to a position which, at an earlier moment in time, was occupied by the other eye of the observer. It then becomes apparent that, by comparing the direction of gaze of the one eye at different points in time, it becomes possible to calculate the fixation point by triangulation since the eye has moved to different positions with respect to the displayed dataset. The applicant has also realised, that this principle can be extended in order to lengthen the triangulation base line. It should be noted that it is not necessary for the position of one eye to move to be coincident with the position of the other eye. It is merely sufficient to get effective separation along a baseline for triangulation.

The technique can further be enhanced by monitoring the direction of gaze of both of the observer's eyes.

Advantageously, the motion of the or each eye is tracked in time in order to exclude some types of eye motion such as saccade motion, where the eye fixation point jumps rapidly from one target to another target, in order that motion of this type may be detected and excluded from the gaze position determining algorithms.

According to a fourth aspect of the present invention, there is provided an apparatus for tracking an observer's eyes to determine the observer's fixation point within a three-dimensional space when viewing an image or object subject to rotation within that space, the apparatus comprising means for monitoring the direction of gaze of at least one eye of the observer at first and second times, and data processing means for projecting the direction of gaze into the image space at first and second times in order to calculate a fixation point.

Preferably the fixation point corresponds to the region of intersection of the lines, or to a region centred on the closest approach of the lines to one another.

According to a fifth aspect of the present invention, there is provided a computer program product for causing a computer to perform the method of the first aspect of the present invention.

According to a sixth aspect of the present invention, there is provided a computer program product stored on a computer readable medium, the product causing a computer to perform the method of the third aspect of the present invention.

The present invention will further be described, by way of example, with reference to the accompanying drawings, in which;
Figure 1 schematically illustrates a view of three-dimensional data space;
Figure 2 schematically illustrates a view of an object within the data space, including an enhanced region;
Figure 3 is a flow diagram illustrating the steps performed in a data pre-processing operation;
Figure 4 is a flow diagram of the steps performed in a display operation;
Figure 5 schematically illustrates an apparatus constituting an embodiment of the present invention;
Figures 6a to 6c illustrate mapping of the data volume and enhancement region to a view plane, and also illustrate the boundaries of the data volume and the enhancement region on the viewplane; and
Figures 7a to 7c illustrate the principles behind observer eye tracking within a rotating dataset.

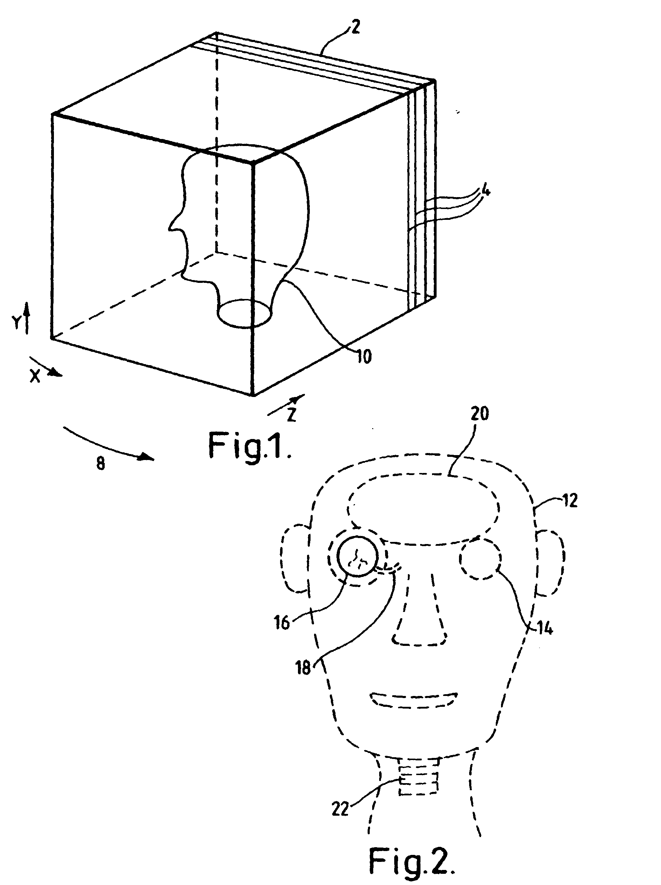

Figure 1 schematically illustrates a cubic data volume 2 defined by orthogonal X,Y and Z axes. The X and Y axes define a view slice, and a plurality of slices are stacked along the Z direction. Typically such a dataset may comprise 256 x 256 pixels in the X and Y directions and 128 planes in the Z direction. The planes are schematically illustrated in the diagram and designated 4. The data within the dataset is subject to co-ordinate transformation, in a manner known to the person skilled in the art, in order that one or more perspective views of the dataset may be presented to the viewer. Furthermore, it is known to rotate the view of the dataset around an axis, typically passing through the centre of representation of the dataset or through the back plane thereof, in order that the viewer can use parallax information in order to provide further cues concerning the spatial relation of the features of a structure displayed within the dataset. As shown in Figure 1, the features within the dataset may represent an object, such as a part or whole of a persons body, as imaged through a technique such as nuclear magnetic resonance imaging.

Figure 2 schematically illustrates the display of data representing a head 12. In general, the various layers for of the dataset are stacked and displayed such that each layer is transparent, and structures therein are translucent, thereby enabling a view to be taken through the entire structure of the head, from the front to the back. This view provides contextual information, in as much as the spatial relationship of each feature with respect to every other feature is apparent, but results in features towards the rear of the head being partially obscured by features which are further forward, and conversely, features towards the front of the head containing images of features towards the rear of the head. Thus features such as the outline of the head 12, the left and right eyes 14 and 16, respectively, and internal features such as optic nerves 18, the brain 20 and vertebrae 22 are all viewable simultaneously. The image may be considered as being akin to that of an x-ray.

The applicant has realised that it is advantageous to superimpose upon this contextual information, more detailed or enhanced information which may be presented in a different way, for example at high resolution or using a different rendering technique. The position of the enhanced region can be defined within the volume of the dataset using an input device, as will be described hereinafter. Suppose, for example, that the user has used the input device to select a volume of space encompassing the right eye 16. The data from the dataset corresponding to this region is then presented in greater detail in place of the lower grade contextual information. Additionally, this data may be subject to data processing in order to present it in a surface rendered form, such that the surfaces of structures are calculated and presented, thereby giving the appearance of viewing the surface directly without any intervening tissue. Additionally, if the user so selects, other techniques such as contour mapping or false colour may be applied to structures highlighted within the enhancement region in order to aid interpretation of the volumetric data.

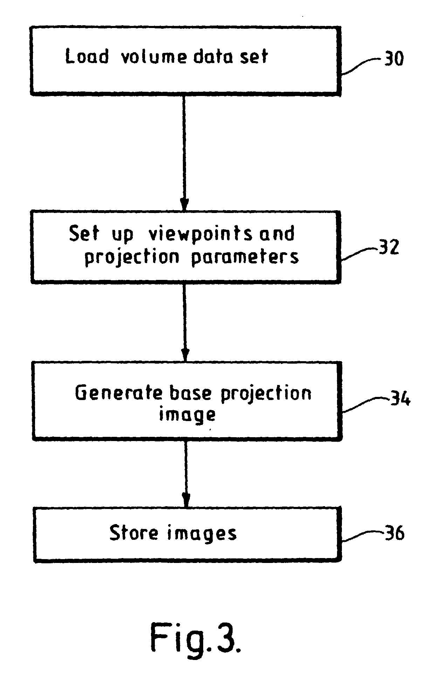

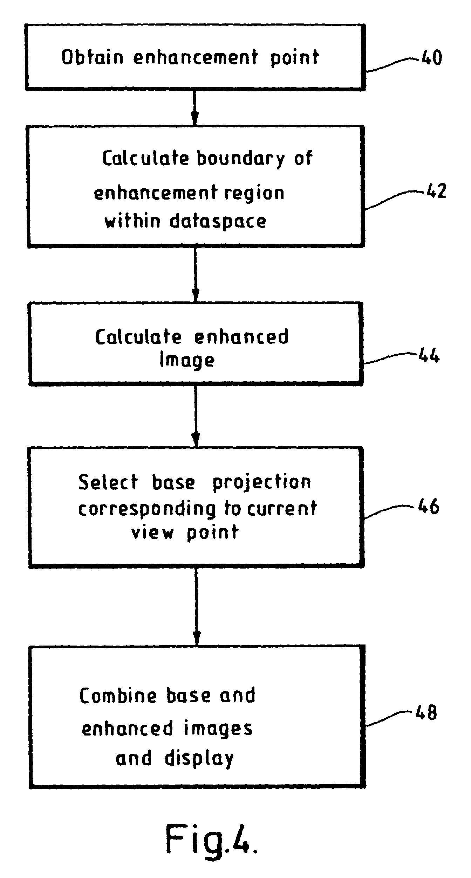

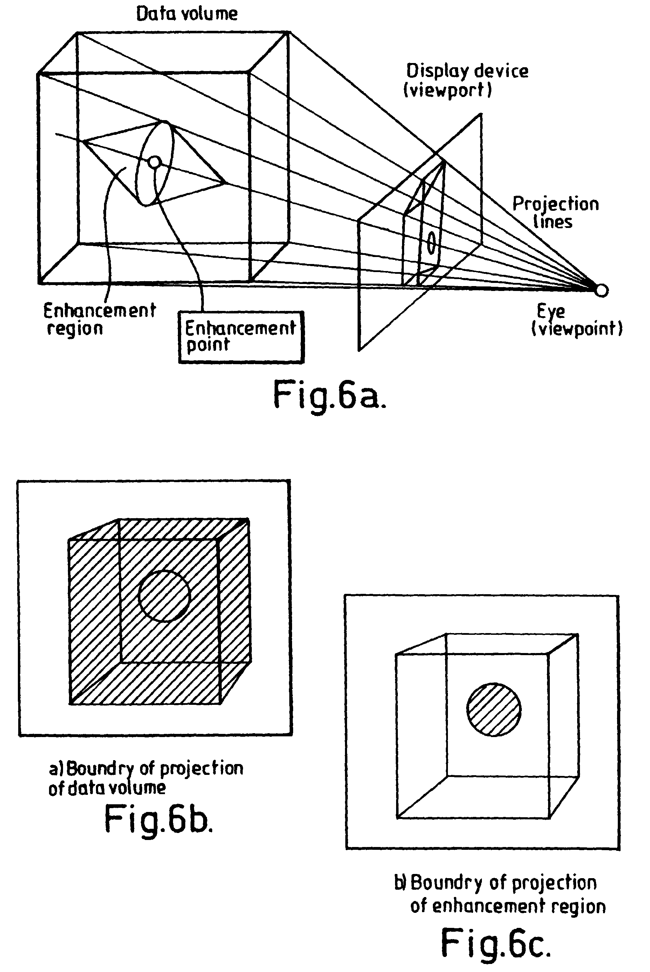

Views of the data in its first contextual form and in its second enhanced form may be computed in real time. However substantial computational savings can be made by pre-processing the data set. Figures 3 and 4 are flow charts illustrating the processing of the data. Processing commences at step 30 where the data set is loaded. Control then passes to step 32 where the number of view points, and other relevant projection parameters are set up such that various views of the three dimensional data volume can be mapped onto a two dimensional display plane for display on a display device, such as a cathode ray tube or LCD panel. Control then passes from step 32 to step 34 where one or more base projection images are calculated. Reference may be made to Figure 6a which schematically illustrates how the three dimensional data volume is co-ordinate transformed along a series of projection lines in order to obtain a two dimensional representation for the display device. Once the base projection images have been calculated, control is passed to step 36 where the images are stored. For a stereoscopic display, different projection images must be calculated for each of the left and right eye view points. Furthermore, since the data set is often displayed with rotary motion, in order to use parallax cues to enhance perception of depth, images must be calculated for each frame of the displayed motion.

During the display of the images, it is necessary to continuously obtain the position of the enhancement region and, if necessary, to recalculate the data to be displayed in the enhancement region. In order to achieve this, control is passed to step 40 where an input device is interrogated in order to obtain the equivalent position within the data volume of an enhancement point. Control is then passed to step 42 which calculates the boundary of an enhancement region within the data space. The enhancement region is centred around the enhancement point and only those voxels within the enhancement region are re-examined in order to calculate the enhanced image. Control is then passed to step 44 which calculates the enhanced image in accordance with a predetermined strategy, such that, for example, the enhanced image if calculated at greater resolution and may be brighter than the base image. Control is then passed to step 46 which selects the base projection image corresponding to the current view point. From step 46, control is then passed to step 48 which combines the base and enhanced images for display. The base and enhanced images may be merely superposed (akin to using two projectors to project onto the same screen) or further processing may be performed, such as to reduce or degrade the base image in the region of the enhanced image.

For exploiting the potential computational benefits of this approach, the enhanced volume should be localised. Thus the amount of enhancement may be maximised at the enhancement point and fall away with increasing distance from the enhancement point. The manner in which the enhancement decreases with lateral, axial or radial distance may be set according to a predetermined function and it is preferred that the enhancement falls to zero within a given distance, for example corresponding to the boundary of the enhancement region.

There are a number of competing strategies which may be used to form the view through the data set. Thus the base image may be generated in real time for each change in view point or enhancement point, but this is computationally expensive. In order to reduce computational requirements, the base image may be pre-processed. The enhancement image may then be updated in real time. This allows flexibility in changing the enhancement point. The view point may be fixed or may be changed depending on whether the pre-processing of the base image was performed only for a single view point or for a smoothly changing set of view points thereby giving the impression that the data space is rotating on the screen.

As a further enhancement, the base projection and the enhancement images may be pre-processed in predetermined positions. This effectively allows the generation of a non-interactive movie wherein the enhancement region is walked through the data volume. As a final possibility, the base projection and set of spaced apart enhancement images may be pre-processed. This allows interactive movement of the enhancement region, but reduces the number of enhancement centres such that only a finite number of enhanced views for a restricted number of enhancement regions need to be calculated. Thus, during real time display, only the combination of the base and enhanced images needs to be done in real time. Thus if the enhancement images are pre-processed, steps 42 and 44 of Figure 4 may be replaced by a single step in which the correct enhanced image is selected.

As mentioned earlier, the user may select the enhanced data region by using a pointer, such as a mouse, to move graphical markers representing the X, Y and Z co-ordinates such as that the intersection defines of the centre of the enhancement region. Alternatively, spatial sensors such as magnetic position sensors may be used such that they are moved by the user in order to select the appropriate enhancement region.

Eye tracking systems represent the most natural way for the user to select the region of data to be enhanced. Known tracking systems, such as those involving retinal imaging, or merely the use of a camera to view the front of the eye and thereby to estimate in which direction the eye is looking work relatively well when hying to estimate what the user is looking at on a two-dimensional plane. One reason for this is that slight errors in directional calculation tend not to be significant. However, in the context of eye tracking within a three-dimensional space, slight errors become far more significant by virtue of the fact that the left the right eyes are only separated by six centimetres or so. Triangulation from such a short baseline gives rise to larger errors of estimating the point within a volume which the user is looking at.

The applicant has realised that the baseline can effectively be extended when viewing images which rotate in a predictable manner.

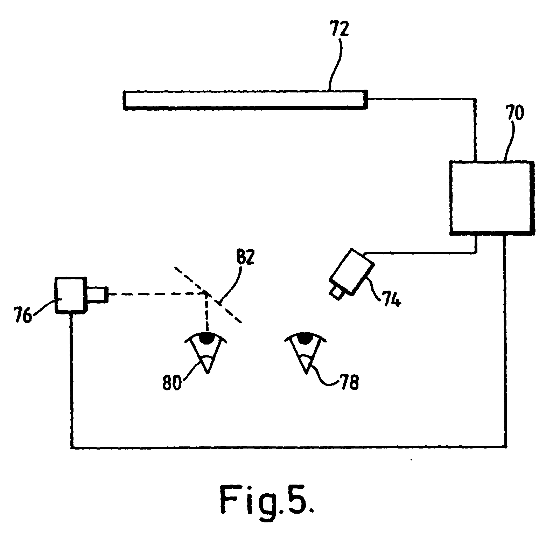

Figure 5 schematically illustrates an apparatus for performing observer eye tracking. A data processor 70 generates a plurality of views which are displayed on a display 72. One or more cameras 74 and 76 are arranged to view the eyes 78 and 80 of an observer. Camera 74 schematically represents a system which the camera is offset to one side of the observer and captures an image of the eye, which is then processed to estimate in which direction the observer is looking. Camera 76 is part of alternative system in which the camera effectively views the eye 78 from directly in front, by virtue of light reflected from a half silvered mirror 82. The camera 76 can either view the front of the eye, in order to estimate which direction the observer is looking, or can image the retina of the eye thereby locating the part of the image which falls on the foveal region of the eye. This region defines the portion of the eye which captures high definition images. The remaining portion of the retina handles peripheral vision at a much lower resolution. The data processor 70 receives the camera information in respect of one or both eyes in order to perform visual tracking to determine the observer's fixation point in three-dimensions.

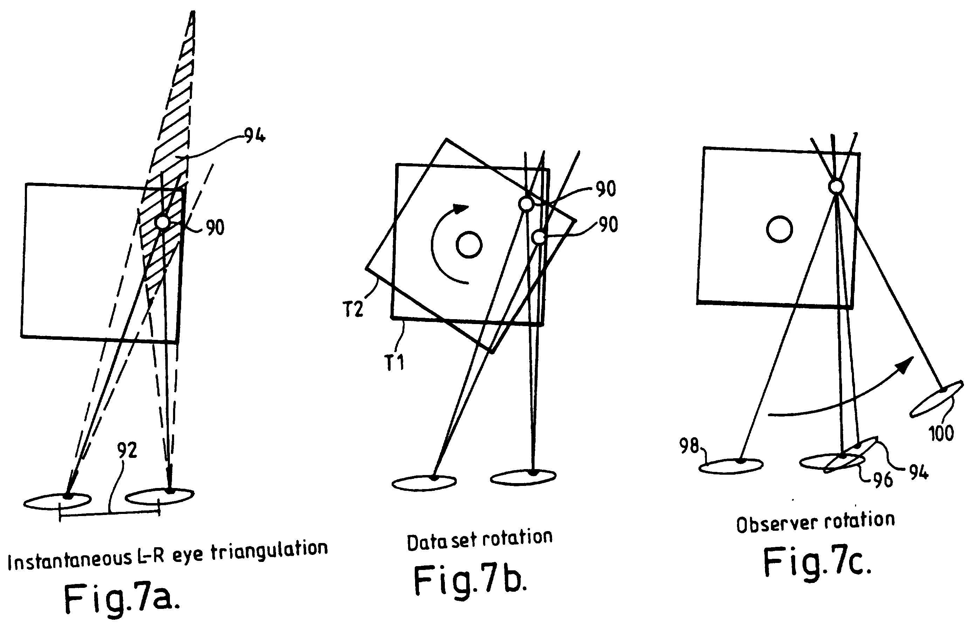

Figures 7a-7c illustrate how fixation point tracking can be achieved monitoring only one eye, and how the triangulation baseline can be extended. Figure 7a schematically illustrates the situation when both eyes are tracked with respect to a stationary three-dimensional object. In theory, the direction of view of each eye can be accurately measured to calculate the point of intersection 90. However, in practice, the measurement of direction is associated with an angular uncertainty, shown only in one dimension in Figure 7a, although it also exists above and below the plane of the figure, and this combined with the short distance 92 between the eyes gives rise to a large volume of uncertainty 94 as represented by the shading.

The uncertainty in triangulation can be reduced either by taking more measurements, or by effectively extending the baseline between the eyes upto a maximum where the lines of intersection of the views are perpendicular. Both triangulation and fixation point tracking techniques can be applied when the dataset rotates with respect to the observer as shown in Figures 7b and 7c. In Figure 7b, motion tracking is performed with both eyes as the region of interest 90, moves from the first position at time T1 to a second position at time T2 with respect to the observer. At each of these positions, and at intermediate ones, eye direction data maybe used to calculate a region of intersection. However, further enhancements to the tracking can be performed by comparing our tracking movements made at T1 with those made at time T2. The reason for this is illustrated in Figure 7c. In Figure 7b, the observer represents the point of reference and the dataset rotates with respect to the observer. Figure 7c represents the same amount of relative motion, but now the point of reference is the dataset, and consequently the observer can be regarded as moving around the dataset. Providing the degree of rotation is great enough, two non-mutally exclusive possibilities arise. Firstly, it can be observed that the position of the left eye 94 at one view point corresponds to the position of the right eye 96 at a second view point. Thus this means that only one eye need be subjected to tracking. Thus, for example, if only the left eye was tracked, it can assume the position of the right eye 96 and of the left eye 98 at different moments in time, and these measurements can then be triangulated to detect the observer's fixation point. Furthermore, it will be observed that the maximum distance between the left eye 98 at time T1 and the right eye 100 at time T2 is much greater than the normal interoccular distance. This causes the triangulation baseline to be extended and consequently reduces the volume of the region uncertainty resulting from the measurement uncertainty. It should be noted that the technique does not actually require one eye to move to the position of the other eye in order to work properly.

In order to implement eye tacking properly, it is necessary to realise that the eye undergos several types of small amplitude involuntary movement, such as slow drift, fast click and high frequency tremor as well as the co-ordinated movements of pursuit when the eyes move to track a moving object and saccade when the eye fixation point jumps rapidly from one point to another target. Thus some filtering needs to be performed to remove the effects of involuntary movements, such as high frequency tremor, in order to remove instantaneous gaze misalignment.

As a further enhancement, the tracking system could fall back on the conventional instantaneous left and right eye triangulation in the period immediately following a saccade before the observer has been following the new feature of interest for sufficiently long a time to provide accurate depth estimation based on data volume rotation. Furthermore, since conventional eye tracking provides an accurate gaze direction but lacks information about target distance, the dataset could itself be examined immediately following a saccade in order to identify a best guess of a likely new target for enhancement. This exploits the intuitive notion that an observer is unlikely to transfer his or her attention to a featureless region of the dataset, and consequently, the region along the gaze direction which contains the most detail stands a good chance a being the region to which the observer has transferred his gaze.

Using the conventional left-right eye based 3D tracking method requires the use of a stereoscopic display (and hence perspective projection). Whilst the present invention can be applied to enhance tracking on a stereoscopic display, it has the advantage of being usable on a monoscopic display (whose images are produced using either perspective or orthographic projection). This means it can be used with a standard monitor display with just the addition of an eye-tracking device.

It is thus possible to provide a method of an apparatus for displaying volumetric data to a user.

## Claims

1. A method of displaying data, wherein the data represents structure within at least a three dimensional space, the method comprising the steps of generating a first image in which the data is displayed in a first display mode, calculating a position of an enhancement region within the data space, and generating an enhanced image representing the data within the enhancement region and displaying the enhanced region in a second display mode.

2. A method as claimed in claim 1, characterised in that the second display mode has a higher resolution than the first display mode.

3. A method as claimed in claim 1 or 2, characterised in that the data in the second display mode is rendered differently to the data displayed in the first display mode.

4. A method as claimed in any one of the preceding claims, characterised in that the enhancement region can be moved interactively through the data.

5. A method as claimed in any one of the preceding claims, characterised in that the second display mode comprises a weighted summation of the first image and the enhanced image.

6. A method as claimed in any one of the preceding claims, characterised in that the first image is rendered in a volumetric mode so as to provide the user with contextual information.

7. A method as claimed in any one of the preceding claims, characterised in that data within the enhanced region is displayed at higher contrast and/or higher brightness that data in the first display mode so as to make it more visible to the user.

8. A method as claimed in any one of the preceding claims in which the data is pre-processed to extract features within the data in order to represent them at least partially in outline in the first display mode.

9. A method as claimed in any one of the preceding claims, characterised in that the data space is subdivided so as to define a plurality of enhancement regions.

10. A method as claimed in claim 9, characterised in that the enhanced images are calculated for each of the enhancement regions and stored, such that they are available for near instantaneous display.

11. A method as claimed in claim 4, characterised in that the position of the enhancement region is defined by spatial tracking.

12. A method as claimed in claim 4, characterised in that the position of the enhancement region is determined by monitoring the directions of a user's gaze.

13. A method as claimed in any one of the preceding claims characterised in that the representation of the data is displayed with cyclic motion superimposed thereon in order to enhance a user's three dimensional perception of the data by enabling them to use parallax cues.

14. An apparatus for displaying volumetric data, the apparatus characterised by comprising data processor (70) for generating a first image in which the data is displayed in a first display mode, input means (74, 76) for defining the position of an enhancement region within the data space, and a data processor (70) for generating an enhanced image representing the data in the enhancement region, the enhanced data being displayed in a second display mode.

15. A computer program for causing a programmable data processor to perform the method defined in any one of claims 1 to 13.

16. A method of tracking an observer's fixation point within an image or object, the image or object being subject rotation in a display space, the method comprising the steps of monitoring the direction of gaze of at least one eye of the observer at first and second times in order to triangulate the direction of gaze to calculate the fixation point.

17. A method as claimed in claim 16, in which the first and second times are selected such that the relative motion between the rotating image and the observer causes a triangulation baseline to be extended beyond the observer's interocular distance.

18. A method as claimed in claim 16 or 17, characterised in that the direction of gaze of a single one of the observer's eyes is tracked.

19. A method as claimed in claim 16 or 17, characterised in that the direction of gaze of both of the observer's eyes are tracked.

20. A method as claimed in any one of the claims 16 to 19, characterised in that motion of the user's gaze is tracked with respect to time in order to exclude some types of eye motion from being used in the determination of the direction of gaze.

21. A method as claimed in any one of the claims 16 to 20, characterised in that following a saccade, the data set is examined to identify a volume for enhancement exploiting the assumption that the observer is unlikely to transfer his attention to a featureless region of the data.

22. An apparatus for tracking an observer's eyes to determine the observer's fixation point within a three dimensional space when viewing an image or object subject to rotation within that space, the apparatus comprising a gaze monitoring device (74, 76) for monitoring the direction of gaze of at least one eye of an observer, and a data processor (70) for projecting the direction of gaze into the image space at first and second times in order to calculate the fixation point.

23. A computer program for causing a data processor to perform the method as claimed in any one of claims 16 to 21.
